# EUROPEAN PATENT SPECIFICATION

(11) **EP 4 458 633 B1**
(45) Date of publication and mention of the grant of the patent: **09.12.2026**
(21) Application number: 23737130.7
(22) Date of filing: 06.01.2023
(51) Int. Cl.: B60W 30/16, B60W 30/095

(54) **DATA PROCESSING METHOD AND APPARATUS, DEVICE, AND STORAGE MEDIUM**
DATENVERARBEITUNGSVERFAHREN UND -VORRICHTUNG, VORRICHTUNG UND SPEICHERMEDIUM
PROCÉDÉ ET APPAREIL DE TRAITEMENT DE DONNÉES, DISPOSITIF ET SUPPORT DE STOCKAGE

(30) Priority: 06.01.2022 CN 202210011355
(43) Date of publication of application: 06.11.2024
(73) Proprietor: Tencent Technology (Shenzhen) Company Limited, Shenzhen, Guangdong 518057 (CN)
(72) Inventor: DU, Haining, Shenzhen, Guangdong 518057 (CN)
(74) Representative: Novagraaf International SA
(86) International application number: PCT/CN2023/070887
(87) International publication number: WO 2023/131268

(56) References cited:
- WO-A1-2019/204053
- CN-A- 111 739 342
- CN-A- 113 793 533
- CN-A- 114 348 001
- JP-A- 2019 121 040
- US-A1- 2021 300 350

## Description

### RELATED APPLICATION

This application is based on Chinese Patent Application No. 2022100113555, filed on January 06, 2022, and claims priority to this Chinese Patent Application.

### FIELD OF THE TECHNOLOGY

Embodiments of this application relate to the fields of intelligent transportation and automatic driving, and more specifically, relate to a data processing method, a device, and a storage medium.

### BACKGROUND OF THE DISCLOSURE

With more and more attention to a road safety problem, an intelligent control system of a vehicle is increasingly required. In a related technology, usually a driving route is directly changed only according to an operation of a driver, only a road congestion condition of a road ahead can be provided for the driver, more road information of the current scenario cannot be provided for the driver, more prompt information cannot be provided for the driver in the driving process, and relatively less information is provided for the driver. Therefore, user experience is relatively poor.

US2021/300350A1 discloses a vehicle control device includes a recognizer configured to recognize an object near a vehicle, a generator configured to generate one or more target trajectories, along which the vehicle travels, on the basis of the object, and a driving controller configured to automatically control driving of the vehicle on the basis of the target trajectories. The generator calculates a travelable area, which is an area where the vehicle is able to travel, on the basis of a state of the object, and excludes a target trajectory outside the calculated travelable area from the one or more generated target trajectories, and the driving controller automatically controls the driving of the vehicle on the basis of the target trajectory that remains without being excluded by the generator.

WO2019/204053A1 discloses a system and method for automated lane change control for autonomous vehicles are disclosed. A particular embodiment is configured to: receive perception data associated with a host vehicle; use the perception data to determine a state of the host vehicle and a state of proximate vehicles detected near to the host vehicle; determine a first target position within a safety zone between proximate vehicles detected in a roadway lane adjacent to a lane in which the host vehicle is positioned; determine a second target position in the lane in which the host vehicle is positioned; and generate a lane change trajectory to direct the host vehicle toward the first target position in the adjacent lane after directing the host vehicle toward the second target position in the lane in which the host vehicle is positioned.

### SUMMARY

Preferred embodiments of the present invention are provided as defined in the appended claims, by which the protection scope is to be set. This application provides a data processing method, a device, and a storage medium, which can provide more information for a driver with reference to a current driving environment, thereby improving user experience and driving safety.

A first aspect provides a data processing method according to independent claim 1.

A second aspect provides an electronic device according to independent claim 10.

A third aspect provides a computer readable storage medium according to independent claim 11.

Based on the foregoing technical solutions, first, based on a position of a first vehicle around a target vehicle, multiple areas around the first vehicle are determined, a longitudinal center line of the first vehicle not coinciding with a center line of a first lane on which the first vehicle travels; based on a relative position of the target vehicle to the first vehicle, a target area in which the target vehicle is located is determined from the multiple areas; and based on the target area, a prompt is displayed. This solution may provide more information for a driver with reference to a current driving environment, thereby improving user experience and driving safety.

### BRIEF DESCRIPTION OF THE DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.
FIG. 1 is a schematic block diagram of a system framework according to an embodiment of this application.
FIG. 2 is an example of a scenario of a data processing method according to an embodiment of this application.
FIG. 3 is a schematic flowchart of a data processing method according to an embodiment of this application.
FIG. 4 is an example of a vehicle offset scenario in a data processing method according to an embodiment of this application.
FIG. 5 is another schematic flowchart of a data processing method according to an embodiment of this application.
FIG. 6 is a schematic block diagram of a data processing apparatus according to an embodiment of this application.
FIG. 7 is a schematic structural diagram of an electronic device according to an embodiment of this application.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application.

The solutions provided in this application may be applied to multiple vehicle control scenarios. For example, the solutions provided in this application may relate to an artificial intelligence (AI) technology. AI is a theory, method, technology, and application system that uses a digital computer or a machine controlled by the digital computer to simulate, extend, and expand human intelligence, perceive an environment, obtain knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

It is to be understood that the AI technology is a comprehensive discipline, and relates to a wide range of fields including both hardware-level technologies and software-level technologies. The basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a natural language processing technology, and machine learning/deep learning.

With research and progress of artificial intelligence technologies, the artificial intelligence technologies are studied and applied in multiple fields, such as common smart home, intelligent wearable devices, virtual assistants, intelligent sound boxes, intelligent marketing, unmanned driving, autonomous driving, unmanned aerial vehicles, robots, intelligent medical treatment, and intelligent customer service. It is believed that with development of technologies, artificial intelligence technologies will be applied in more fields and play an increasingly important role.

The solutions provided in this application may be applied to technologies such as an automatic driving technology or an auxiliary driving technology of artificial intelligence. For example, the data processing method in this application may be applied to the automatic driving technology.

Based on this, according to the method provided in this application, corresponding prompt information may be displayed in real time according to a traffic status in a scenario, so that a driver or an automatic driving control center confirms a traveling track of a vehicle in real time, thereby reducing a probability of a traffic accident of the vehicle, thereby improving safety. The automatic driving technology may include technologies such as a high-precision map, environment awareness, behavior decision, path planning, and motion control. The automatic driving technology has a wide application prospect. For another example, the data processing method in this application may be applied to the auxiliary driving technology. Based on this, the method provided in this application may be used for assisting a driver in driving a vehicle, so as to reduce a probability that a traffic accident occurs on the vehicle, thereby improving safety.

In addition, the solutions provided in this application may further relate to various network frameworks, such as the Internet of Things (IoT) or cloud IoT related to the transportation industry. The Internet of Things in the transportation industry may also be referred to as vehicle-to-everything.

The Internet of Things means that by using various apparatuses and technologies such as information sensors, radio frequency recognition technologies, global positioning systems, infrared sensors, and laser scanners, any object or process that needs to be monitored, connected, or interacted with is collected in real time, and various required information such as sound, light, heat, electricity, mechanics, chemistry, biology, and position is collected, so as to implement universal connections between objects and between objects and people by using various possible network access, so as to intelligently perceive, recognize, and manage the objects and the processes. Internet of Things is an information carrier according to the Internet, traditional telecommunication network, etc. It enables all ordinary physical objects that can be independently addressed to form an interconnected network.

The cloud Internet of Things is designed to access, to the Internet, information sensed by a sensing device and an instruction received by the sensor device in traditional Internet of Things, truly implement networking, and implement massive data storage and computing by using a cloud computing technology. Because a feature of the Internet of Things is that things are connected to things, and a current running status of each "object" is perceived in real time, a large amount of data information is generated in this process. How to summarize the information, and how to select useful information from the massive information to make decision support for subsequent development have become key problems that affect the development of the Internet of Things, and therefore, the cloud of the Internet of Things based on the cloud computing and the cloud storage technology becomes powerful support for the Internet of Things technology and the application.

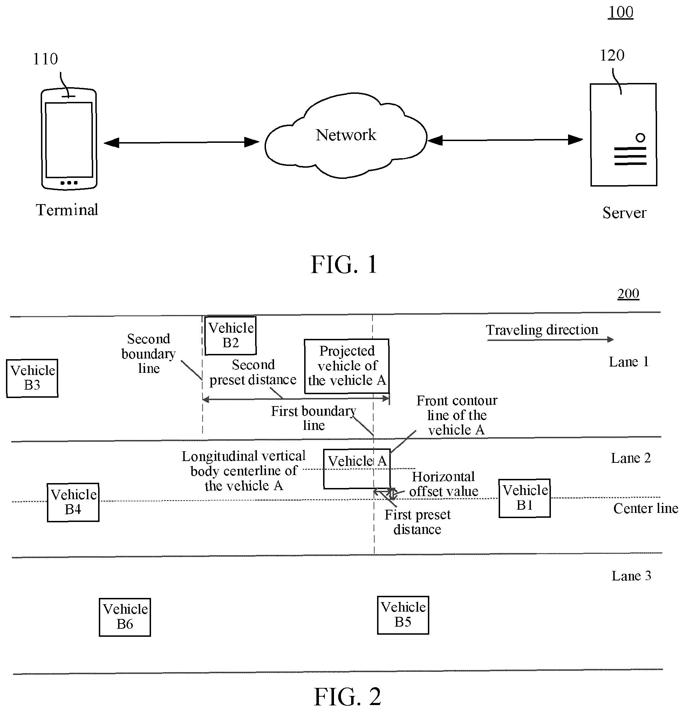

FIG. 1 is a schematic block diagram of a system framework 100 according to an embodiment of this application. As shown in FIG. 1, the system framework 100 includes a terminal device 110 and a server 120. The terminal device 110 may communicate with the server 120 based on the Internet protocol in a wireless or wired manner. A quantity of terminal devices 110 and a quantity of servers 120 in FIG. 1 are merely an example. According to an implementation requirement, there may be any quantity of terminal devices 110 and any quantity of servers 120.

The terminal device 110 includes but is not limited to an intelligent mobile phone, a tablet computer, an in-vehicle terminal, a palm game console, and another small personal portable device, such as a personal digital assistant (PDA) or an electronic book (E-book). The server 120 may be an independent physical server, or may be a server cluster or a distributed system formed by multiple physical servers, or may be a cloud server that provides a basic cloud computing service such as a cloud service, a cloud database, cloud computing, a cloud function, cloud storage, a network service, cloud communication, a middleware service, a domain name service, a security service, big data, and an artificial intelligence platform. The server may be directly or indirectly connected in a wired or wireless communication manner, which is not limited herein.

The terminal device 110 may be located in a current vehicle, and obtains positioning information of a first vehicle from the server; and
positioning information of another vehicle around the current vehicle, so that the terminal device 110 determines, based on a position of a first vehicle around a target vehicle, multiple areas around the first vehicle, a longitudinal center line of the first vehicle not coinciding with a center line of a first lane in which the first vehicle travels; determines, based on a relative position of the target vehicle to the first vehicle, a target area from the multiple areas, in which the target vehicle is located; and provides a prompt based on the target area.

In the embodiments of the present disclosure including the embodiments of both the claims and the specification (hereinafter referred to as "all embodiments of the present disclosure") the terminal device 110 may further store a traffic network parameter of a target road section and traveling data of a vehicle on the target road section. The traffic network parameter of the target road section may include parameters such as a quantity of roads of a real target road section, relative angle information between roads, and a pedestrian of the target road section, and may further include parameters such as a traffic light identifier and a speed limit identifier that are set in the target road section. The traveling data of the vehicle on the target road section may include a traveling speed interval, a steering angle, a lateral distance and a longitudinal distance between vehicles on the real target road section, and the like. In all embodiments of the present disclosure, the traffic network parameter of the target road section and the traveling data of the vehicle on the target road section may further be obtained from the server. The server may also obtain the traffic network parameter of the target road section and the traveling data of the vehicle on the target road section from another road monitoring server, which is not specifically limited in this application.

This application provides a solution, which is applicable to a case in which a longitudinal center line of a vehicle body does not coincide with a center line of a lane.

FIG. 2 is an example of a scenario 200 to which a data processing method is applicable according to an embodiment of this application. The data processing method is executable by a current vehicle in traveling, that is, a target vehicle, or is executable by a terminal device disposed in the current vehicle, or is further executable by a server.

As shown in FIG. 2, the scenario 200 includes a lane 1, a lane 2, a lane 3, a vehicle A, a vehicle B1, a vehicle B2, a vehicle B3, a vehicle B4, a vehicle B5, and a vehicle B6. A vehicle traveling direction on the lane 1, the lane 2, and the lane 3 is the same. A specific traveling direction is shown by a traveling direction arrow in FIG. 2. A vehicle body longitudinal center line of the vehicle A does not coincide with a center line of the lane 2. The vehicle B1, the vehicle B2, the vehicle B3, the vehicle B4, the vehicle B5, and the vehicle B6 are surrounding vehicles of the vehicle A. In all embodiments of the present disclosure, the current vehicle may be any vehicle of the vehicle B1, the vehicle B2, the vehicle B3, the vehicle B4, the vehicle B5, or the vehicle B6, and a first vehicle may be the vehicle A.

This application provides a solution, which may be applicable to a case in which the vehicle body longitudinal center line of the vehicle A does not coincide with the center line of the lane 2.

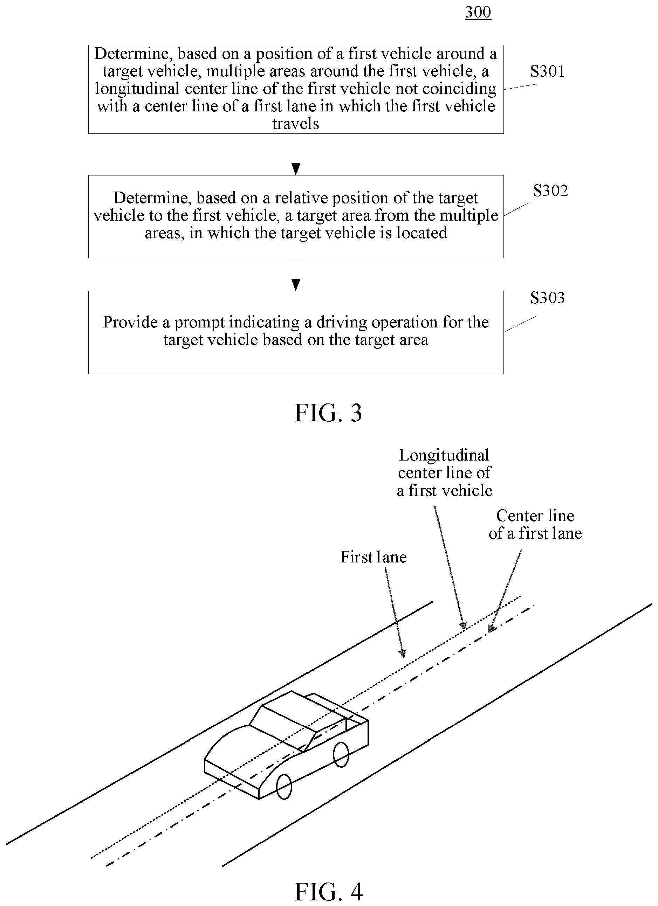

FIG. 3 is a schematic flowchart of a data processing method 300 according to an embodiment of this application. The method may be applied to a device, for example a vehicle terminal, or a server of an integrated data processing system. The server may be the server 120 shown in FIG. 1. The method may be applicable to a current vehicle in traveling, that is, a target vehicle, or is applicable to a terminal device disposed in the current vehicle.

As shown in FIG. 3, the method 300 may include some or all of the following content:
S301. Determine, based on a position of a first vehicle around a target vehicle, multiple areas around the first vehicle, a longitudinal center line of the first vehicle not coinciding with a center line of a first lane in which the first vehicle travels. In all embodiments of the present disclosure, the device may detect whether there is a first vehicle around the target vehicle, a longitudinal center line of which not coinciding with a center line of a first lane in which the first vehicle travels. If the longitudinal center line does not coincide with the center line of the first lane, the first lane is offset laterally. When there is a first vehicle around the target vehicle, S301 may be performed. The device may determine the position of the first vehicle from the data generated by one or more cameras or radar equipments of the target vehicle, and positioning information of the target vehicle. In all embodiments of the present disclosure, the device may obtain the position of the first vehicle from a server comprising positions of multiple vehicles.
S302. Determine, based on a relative position of the target vehicle to the first vehicle, a target area from the multiple areas, in which the target vehicle is located. In all embodiments of the present disclosure, the device may determine the relative position of the target vehicle from the data generated by one or more cameras or radar equipments of the target vehicle. In all embodiments of the present disclosure, the device may obtain the relative position of the target vehicle from a server comprising positions of multiple vehicles.
S303. Provide a prompt indicating a driving operation for the target vehicle based on the target area. In all embodiments of the present disclosure, different prompts are provided for different target areas.

In all embodiments of the present disclosure, the first vehicle may be a vehicle selected by a user, such as a driver, or may be a vehicle determined according to surrounding driving environment information, where the driving environment information may be received from the server or a roadside device.

In all embodiments of the present disclosure, the longitudinal center line of the first vehicle does not coincide with the center line of the first lane in which the first vehicle travels in this application may mean that the longitudinal center line of the first vehicle and the center line of the first lane in which the first vehicle travels are parallel in a Frenet coordinate system; or may mean that the longitudinal center line of the first vehicle and the center line of the first lane in which the first vehicle travels are at any angle, provided that the longitudinal center line of the first vehicle does not coincide with the center line of the first lane in which the first vehicle travels. This application sets no specific limitation on an angle relationship between the longitudinal center line of the first vehicle and the center line of the first lane.

For example, as shown in FIG. 4, the longitudinal center line of the first vehicle and the center line of the first lane may be parallel in the Frenet coordinate system. Certainly, they may also be at any angle, provided that the longitudinal center line of the first vehicle does not coincide with the center line of the first lane in which the first vehicle travels. This application sets no specific limitation on an angle relationship between the longitudinal center line of the first vehicle and the center line of the first lane.

For example, the first vehicle is in the first lane and does not cross the first lane. Certainly, in another alternative embodiment, the first vehicle may also travel on a lane boundary line in the first lane.

For example, with reference to FIG. 2, as shown in FIG. 2, if the vehicle A is the first vehicle, and the vehicle A does not travel along the center line of the lane 2, there is a lateral offset D_{offset} (according to the Frenet coordinate system) between the vehicle body longitudinal center line of the vehicle A and the center line of the lane 2, and an outer contour of the vehicle A does not cross the lane boundary line. It is to be understood that D_{offset} is between 0 and H/2 (H is a width of the lane 2).

In an implementation, the target area in which the target vehicle is located may be determined according to positioning information of the target vehicle. The positioning information of the target vehicle may be positioning information of a geometric center or a centroid of a rectangular outer contour of a projection of the target vehicle on a two-dimensional plane(e.g., road surface). The positioning information only considers a position on a two-dimensional plane without considering an elevation.

Based on the foregoing technical solution, first, multiple areas around the first vehicle that is not traveling on the center line of the first lane are determined, which indicates that a driving behavior of a vehicle in a range around the first vehicle is affected by the first vehicle. Second, the target area in which the target vehicle is located is determined from the multiple areas, and vehicles in different areas around the first vehicle are differently affected by the first vehicle. Finally, based on the target area, a corresponding prompt is provided automatically, so that a driver or an automatic driving control center can confirm a traveling track of the vehicle in real time, thereby reducing a probability that a traffic accident occurs on the vehicle, thereby improving safety. In addition, the driver can be provided with more information with reference to a current driving environment, thereby improving user experience and driving safety.

In all embodiments of the present disclosure, providing a prompt may include: displaying a prompt.

In all embodiments of the present disclosure, providing a prompt may include: generating a prompt; and sending the prompt to a server, so that the server forwards the prompt to an automatic driving control center, so that a related person confirms a vehicle traveling track.

In all embodiments of the present disclosure, S301 may include:
determining, based on the position of the first vehicle, a reference line that is in a lateral direction of the first lane and at a first preset distance along a direction opposite to a traveling direction of the first vehicle from a front contour line of the first vehicle, as a first boundary line; and
determining a first front area of the first boundary line in the traveling direction of the first vehicle and located in an adjacent lane on a first side of the first lane, the first side of the first lane being opposite to a second side of the first lane towards which the first vehicle deviates laterally; determining a second front area of the first boundary line in the traveling direction of the first vehicle and located in the first lane; obtaining a first area in the multiple areas, the first area comprising the first front area, the second front area, and an adjacent lane on the second side of the first lane.

For example, the first preset distance may be a distance calculated according to historical traffic data, or may be a distance obtained according to expert experience, or may be a longitudinal distance between the front contour line of the first vehicle and a center position of the driver seat of the first vehicle. A specific value of the first preset distance is not specifically limited in this application.

The front contour line of the first vehicle is a first side of an obtained outer contour rectangle after the first vehicle is mapped to a two-dimensional plane, and the first side is a side corresponding to a head contour of the first vehicle.

With reference to FIG. 2, as shown in FIG. 2, on one hand, because the vehicle A is offset in a direction of the lane 1, a vehicle on the lane 3 is not affected. On the other hand, because of a limited angle of view, a vehicle in the front area of the first boundary line in the traveling direction of the vehicle A cannot perceive that the vehicle A is not traveling on the center line of the first lane, and therefore, the vehicle in the front area also does not need to change the driving behavior.

Based on this, the first area comprises the front area of the first boundary line in the traveling direction and the lane 3.

In all embodiments of the present disclosure, S303 may include:
displaying, in a case that the target area is the first area, a prompt indicating that the target vehicle is capable of being controlled to keep current traveling status.

In all embodiments of the present disclosure, S301 may include:
determining, based on the position of the first vehicle, a reference line that is in a lateral direction of the first lane and at a first preset distance along a direction opposite to a traveling direction of the first vehicle from a front contour line of the first vehicle, as a first boundary line;
determining, based on the position of the first vehicle, a reference line that is in a lateral direction of the first lane, and at a second preset distance along a direction opposite to a traveling direction of the first vehicle from a front contour line of the first vehicle as a second boundary line; and
determining an area between the first boundary line and the second boundary line and located in an adjacent lane on a second side of the first lane towards which the first vehicle deviates laterally, as a second area in the multiple areas.

For a manner of determining the second preset distance, refer to the manner of determining the first preset distance in the first area. Details are not described herein again.

For example, the second preset distance may be a distance calculated according to historical traffic data, or may be a distance obtained according to expert experience.

With reference to FIG. 2, as shown in FIG. 2, the second area is an area between the first boundary line and the second boundary line in the lane 1.

In all embodiments of the present disclosure, the second boundary line may further be related to a size of the first vehicle. For example, a boundary line that is located in a direction opposite to the traveling direction of the first vehicle, that is parallel to the normal direction of the first lane, and that is at the second preset distance longitudinally from the driver seat center position of the first vehicle may be determined as the second boundary line.

In some embodiments of this application, S303 may include:
determining, in a case that the target area is the second area and a first lane changing instruction used for instructing the target vehicle to change to an adjacent lane on a first side of the first lane is obtained, whether the target vehicle meets a safe lane changing condition, the safe lane changing condition representing that both a longitudinal distance between the target vehicle and a second vehicle in the adjacent lane on the first side of the first lane and a longitudinal distance between the target vehicle and a third vehicle in the adjacent lane on the first side of the first lane are greater than a third preset distance, the second vehicle being a vehicle in front of the target vehicle in the traveling direction, and the third vehicle being a vehicle behind the target vehicle in the traveling direction;
displaying, in a case that the target vehicle meets the safe lane changing condition, a prompt indicating that the target vehicle is capable of being controlled to change to the adjacent lane on the first side of the first lane; and
displaying, in a case that the target vehicle does not meet the safe lane changing condition, prompt information indicating that the target vehicle is incapable of being controlled to change to the adjacent lane on the first side of the first lane.

For example, the adjacent lane on the first side of the first lane is a right adjacent lane of the first lane. In another example, the adjacent lane on the first side of the first lane may also be a left adjacent lane of a lane in which the target vehicle currently travels, that is, provided that the adjacent lane on the first side of the first lane is different from the first lane and the adjacent lane on the first side of the first lane is a changeable lane specified in a traffic rule. This application specifically sets no specific limitation on the adjacent lane on the first side of the first lane. It is to be understood that the adjacent lane on the first side of the first lane is not only related to the position of the target vehicle, but also related to a total quantity of lanes.

For example, the third preset distance may be a preset distance obtained according to experience, or may be a preset distance obtained according to a current speed of the target vehicle. For example, if the current vehicle speed of the target vehicle is 100 km/h, the third preset distance may be 100 meters. If the current vehicle speed of the target vehicle is 60 km/h, the third preset distance may be 80 meters. A specific value of the third preset distance is not specifically limited in this application.

With reference to FIG. 2, as shown in FIG. 2, if the vehicle A is the first vehicle and the vehicle B2 is the target vehicle, the vehicle B2 is located in the second area between the first boundary line and the second boundary line on the lane 1. When the first lane changing instruction used for instructing the B2 to change to the adjacent lane(e.g., lane 3) on the first side of the first lane is obtained, it indicates that the vehicle B2 has a lane changing intention, and then it is determined whether the vehicle B2 meets a lane changing condition, that is, it is determined whether a longitudinal distance between the vehicle B2 and the vehicle B5 in the the adjacent lane(lane 3) on the first side of the first lane, and whether a longitudinal distance between the vehicle B2 and the vehicle B6 in the the adjacent lane(lane 3) on the first side of the first lane is greater than the third preset distance. If both are greater than the third preset distance, prompt information used for prompting that the vehicle B2 is capable of being controlled to change to the the adjacent lane(lane 3) on the first side of the first lane is displayed.

In all embodiments of the present disclosure, S303 may further include:
determining, in a case that the target area is the second area and an acceleration instruction used for instructing the target vehicle to accelerate is obtained, whether the target vehicle meets a safe acceleration condition, the safe acceleration condition representing that after the target vehicle accelerates at a first acceleration for first duration, a distance between a vehicle in front of the target vehicle and the target vehicle is greater than 0;
displaying, in a case that the target vehicle meets the safe acceleration condition, a prompt indicating that the target vehicle is capable of being controlled to perform an acceleration operation; and
displaying, in a case that the target vehicle does not meet the safe acceleration condition, a prompt indicating that the target vehicle is incapable of being controlled to perform an acceleration operation.

In all embodiments of the present disclosure, it is determined, in a case that the target vehicle meets the safe acceleration condition, whether the target vehicle is to travel out of the second area after traveling for the first duration; and it is redetermined, in a case that the target vehicle does not travel out of the second area, whether the target vehicle meets the safe acceleration condition.

In all embodiments of the present disclosure, it is prompted, in a case that the target vehicle has traveled out of the second area after the target vehicle accelerates at a first acceleration for first duration, that the target vehicle is capable of being controlled to follow a vehicle ahead in a traveling lane of the target vehicle.

When an acceleration instruction used for instructing the target vehicle to accelerate is obtained, it is determined that the target vehicle has an acceleration intention. In this application, specific values of the first acceleration and the first duration are not specifically limited, provided that an average speed of the target vehicle does not exceed a maximum speed limit of a traveling road, and after the target vehicle accelerates at the first acceleration for the first duration, a distance between a vehicle before the target vehicle and the target vehicle is greater than 0.

In some embodiments of this application, S303 may further include:
prompting, in a case that the target area is the second area and an offset instruction used for instructing the target vehicle to deviate laterally towards a second side of a current lane in which the target vehicle is traveling is obtained, that the target vehicle is capable of being controlled to deviate laterally towards the second side of the current lane, and continue to travel until travel out of the second area.

When an offset instruction used for instructing the target vehicle to deviate laterally towards a second side of a current lane is obtained, it is determined that the target vehicle has an offset intention. This application sets no specific limitation on an offset angle of the target vehicle, provided that an outer contour line of the target vehicle in the current traveling direction of the target vehicle does not exceed the current traveling lane of the target vehicle.

In some embodiments of this application, S301 may include:
determining, based on the position of the first vehicle, a reference line that is in a lateral direction of the first lane and at a second preset distance along a direction opposite to a traveling direction of the first vehicle from a front contour line of the first vehicle, as a second boundary line; and
determining a rear area in an adjacent lane on a second side of the first lane towards which the first vehicle deviates laterally and behind the second boundary line as a third area in the multiple areas.

For a manner of determining the second boundary line and the second preset distance, refer to the manner of determining the second boundary line in the second area and the second preset distance. Details are not described herein again.

With reference to FIG. 2, as shown in FIG. 2, the rear area on the lane 1 and of the second boundary line in the traveling direction of the vehicle A is determined as the third area, that is, an area in which the vehicle B3 is located.

In some embodiments of this application, S303 may include:
determining, in a case that the target area is the third area and a second lane changing instruction used for instructing the target vehicle to change to an adjacent lane on a first side of the first lane is obtained, whether the target vehicle meets a safe lane changing condition, the safe lane changing condition representing that both a longitudinal distance between the target vehicle and a fourth vehicle in the adjacent lane on the first side of the first lane and a longitudinal distance between the target vehicle and a fifth vehicle in the adjacent lane on a first side of the first lane are greater than a fourth preset distance, the fourth vehicle being a vehicle in front of the target vehicle in the traveling direction of the target vehicle, and the fifth vehicle being a vehicle behind the target vehicle in the traveling direction of the target vehicle;
displaying, in a case that the target vehicle meets the safe lane changing condition, a prompt indicating that the target vehicle is capable of being controlled to change to the adjacent lane on the first side of the first lane; and
displaying, in a case that the target vehicle does not meet the safe lane changing condition, a prompt indicating that the target vehicle is incapable of being controlled to change to the adjacent lane on the first side of the first lane.

For example, the adjacent lane on the first side of the first lane is a right adjacent lane of the first lane in which the first vehicle currently travels. In another example, the adjacent lane on the first side of the first lane may also be a left adjacent lane of a lane in which the target vehicle currently travels, that is, provided that the adjacent lane on the first side of the first lane is different from the first lane and the adjacent lane on the first side of the first lane is a changeable lane specified in a traffic rule. This application specifically sets no specific limitation on the adjacent lane on the first side of the first lane. It is to be understood that the adjacent lane on the first side of the first lane is not only related to the position of the target vehicle, but also related to a total quantity of lanes.

For example, the fourth preset distance may be a preset fixed distance, or may be a preset distance calculated according to the current speed of the target vehicle. For example, if the current vehicle speed of the target vehicle is 100 km/h, the fourth preset distance may be 100 meters. If the current vehicle speed of the target vehicle is 60 km/h, the fourth preset distance may be 80 meters. A specific value of the fourth preset distance is not specifically limited in this application. Certainly, in another alternative embodiment, the safe lane changing condition may further be that the longitudinal distance between the target vehicle and the fourth vehicle in the adjacent lane on the first side of the first lane is greater than the fourth preset distance, that is, the longitudinal distance between the target vehicle and the fifth vehicle in the adjacent lane on the first side of the first lane is greater than a seventh preset distance, and the fourth preset distance is different from the seventh preset distance, but a minimum safe vehicle distance between vehicles needs to be met.

With reference to FIG. 2, as shown in FIG. 2, if the vehicle A is the first vehicle and the vehicle B3 is the target vehicle, the vehicle B3 is located in the rear area of the second boundary line in the traveling direction of the vehicle A on the lane 1, that is, the third area, and when a second lane changing instruction used for instructing the vehicle B3 to change a lane is obtained, it is determined whether the vehicle B3 meets the lane changing condition, that is, it is determined whether the longitudinal distance between the vehicle B3 and the vehicle B5 and whether the longitudinal distance between the vehicle B3 and the vehicle B6 are both greater than the fourth preset distance, and if both are greater than the fourth preset distance, prompt information used for prompting that the vehicle B3 is capable of being controlled to change to the lane 3 is displayed.

In some embodiments of this application, S303 may further include:
determining, in a case that the target area is the third area and an acceleration instruction used for instructing the target vehicle to accelerate is obtained, whether the target vehicle meets a safe acceleration condition, the safe acceleration condition being used for representing that after the target vehicle accelerates at a second acceleration for second duration, a distance between a vehicle before the target vehicle and the target vehicle is greater than 0;
displaying, in a case that the target vehicle meets the safe acceleration condition, prompt information used for prompting that the target vehicle is capable of being controlled to perform an acceleration operation; and
displaying, in a case that the target vehicle does not meet the safe acceleration condition, prompt information used for prompting that the target vehicle is incapable of being controlled to perform an acceleration operation.

In some embodiments of this application, it is determined, in a case that the target vehicle meets the safe acceleration condition, whether the target vehicle travels out of the third area after the second duration; and
it is redetermined, in a case that the target vehicle does not travel out of the third area, whether the target vehicle meets the safe acceleration condition.

In an implementation, it is prompted, in a case that the target vehicle has traveled out of the third area after the target vehicle accelerates at a second acceleration for second duration, that the target vehicle is capable of being controlled to follow a vehicle ahead in a traveling lane of the target vehicle.

When an acceleration instruction used for instructing the target vehicle to accelerate is obtained, it is determined that the target vehicle has an acceleration intention. In this application, specific values of the second acceleration and the second duration are not specifically limited, provided that an average speed of the target vehicle does not exceed a maximum speed limit of a traveling road, and after the target vehicle accelerates at the second acceleration for the second duration, a distance between a vehicle before the target vehicle and the target vehicle is greater than 0.

In some embodiments of this application, S303 may further include:
projecting, in a case that the target area is the third area, the first vehicle to the lane in which the target vehicle is located, to obtain a first projected vehicle; and
prompting that the target vehicle is capable of being controlled to follow the first projected vehicle, where that the target vehicle follows the first projected vehicle represents that a distance between the target vehicle and the first projected vehicle is greater than or equal to the fifth preset distance in the driving process.
The fifth preset distance may be a preset distance obtained according to experience, or may be a preset distance obtained according to a current speed of the target vehicle. For example, if the current vehicle speed of the target vehicle is 100 km/h, the fifth preset distance may be 100 meters. If the current vehicle speed of the target vehicle is 60 km/h, the fifth preset distance may be 80 meters, that is, the fifth preset distance is the minimum safe vehicle distance between the target vehicle and the first projected vehicle. A specific value of the fifth preset distance is not specifically limited in this application.

It is to be understood that in a process of following the first projected vehicle by the target vehicle, a maximum traveling speed of the target vehicle does not exceed a maximum speed limit of a traveling road section.

In some embodiments of this application, S301 may include:
determining, based on the position of the first vehicle, a reference line that is in a lateral direction of the first lane and at a first preset distance along a direction opposite to a traveling direction of the first vehicle from a front contour line of the first vehicle, as a first boundary line; and
determining a rear area of the first boundary line in the first lane in which the first vehicle is currently traveling as a fourth area in the multiple areas. For example, the rear area of the first boundary line in the first lane may be an area with a preset distance between the first boundary line and a rear edge of the rear area. The preset distance may be 100m.

For a manner of determining the first boundary line, refer to the manner of determining the first boundary line in the first area. Details are not described herein again.

With reference to FIG. 2, as shown in FIG. 2, the rear area on the lane 2 and of the first boundary line in the traveling direction of the vehicle A is determined as the fourth area, that is, an area in which the vehicle B4 is located.

In some embodiments of this application, S303 may include:
prompting, in a case that the target area is the fourth area, that the target vehicle is capable of being controlled to follow the first vehicle, where that the target vehicle follows the first vehicle represents that a distance between the target vehicle and the first vehicle is greater than or equal to a sixth preset distance in the driving process.

The sixth preset distance may be a preset distance obtained according to experience, or may be a preset distance obtained according to a current speed of the target vehicle. For example, if the current vehicle speed of the target vehicle is 100 km/h, the sixth preset distance may be 100 meters. If the current vehicle speed of the target vehicle is 60 km/h, the sixth preset distance may be 80 meters, that is, the sixth preset distance is the minimum safe vehicle distance between the target vehicle and the first vehicle. A specific value of the sixth preset distance is not specifically limited in this application.

It is to be understood that in a process of following the first vehicle by the target vehicle, a maximum traveling speed of the target vehicle does not exceed a maximum speed limit of a traveling road section.

In all embodiments of the present disclosure, the multiple target areas include at least two of the following areas: the first area, the second area, the third area, and the fourth area.

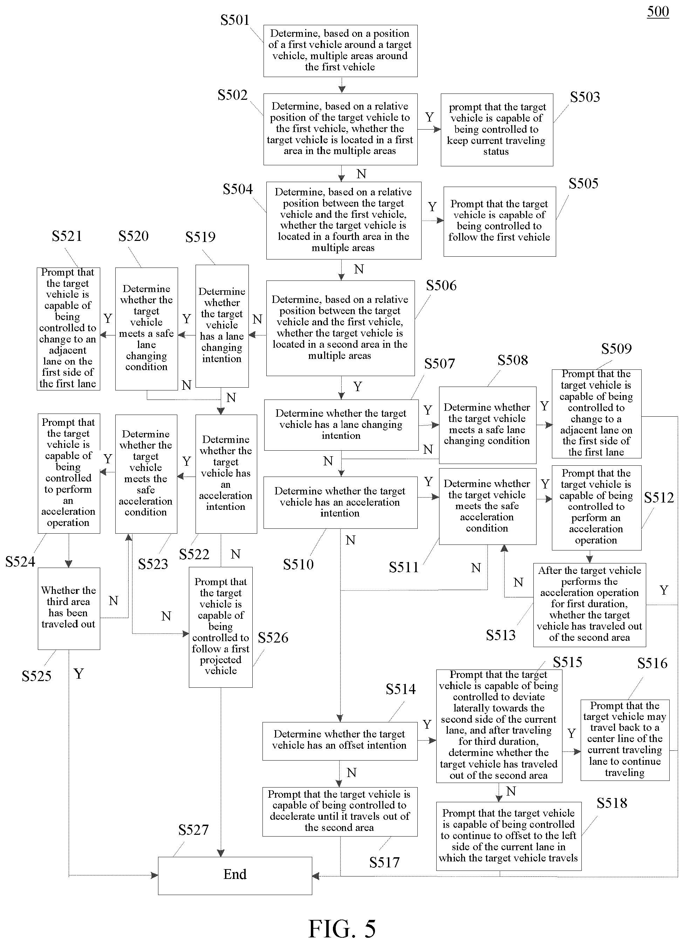

FIG. 5 is another schematic flowchart of a data processing method 500 according to an embodiment of this application.

As shown in FIG. 5, the method 500 may include some or all of the following content:
S501. Determine, based on a position of a first vehicle around a target vehicle, multiple areas around the first vehicle.
S502. Determine, based on a relative position of the target vehicle to the first vehicle, whether the target vehicle is located in a first area in the multiple areas.
S503. If the target vehicle is located in the first area, prompt that the target vehicle is capable of being controlled to keep current traveling status.
S504. If the target vehicle is not located in the first area, determine, based on a relative position between the target vehicle and the first vehicle, whether the target vehicle is located in a fourth area in the multiple areas.
S505. If the target vehicle is located in the fourth area, prompt that the target vehicle is capable of being controlled to follow the first vehicle.
S506. If the target vehicle is not located in the fourth area, determine, based on a relative position between the target vehicle and the first vehicle, whether the target vehicle is located in a second area in the multiple areas.
S507. If the target vehicle is located in the second area, determine whether the target vehicle has a lane changing intention.
S508. If the target vehicle has a lane changing intention in the second area, determine whether the target vehicle meets a safe lane changing condition.
S509. If the target vehicle meets the safe lane changing condition in the second area, prompt that the target vehicle is capable of being controlled to change to the adjacent lane on the first side of the first lane.
S510. When the target vehicle does not meet the safe lane changing condition or the target vehicle does not have a lane changing intention in the second area, determine whether the target vehicle has an acceleration intention.
S511. If the target vehicle has an acceleration intention in the second area, determine whether the target vehicle meets a safe acceleration condition.
S512. If the target vehicle meets the safe acceleration condition in the second area, prompt that the target vehicle is capable of being controlled to perform an acceleration operation.
S513. After the target vehicle performs the acceleration operation for first duration, whether the target vehicle has traveled out of the second area; if yes, the acceleration operation ends; or if no, return to perform S511: determine whether the target vehicle meets the safe acceleration condition.
S514. If the target vehicle does not meet the safe acceleration condition or the target vehicle does not have an acceleration intention in the second area, determine whether the target vehicle has an offset intention.
S515. If the target vehicle has an offset intention, prompt that the target vehicle is capable of being controlled to deviate laterally towards the second side of the current lane, and after traveling for third duration, determine whether the target vehicle has traveled out of the second area.
S516. If the target vehicle has traveled out of the second area after traveling for the third duration, prompt that the target vehicle may travel back to a center line of the current traveling lane to continue traveling.
S517. If the target vehicle has no offset intention, prompt that the target vehicle is capable of being controlled to decelerate until it travels out of the second area.
S518. If the target vehicle does not travel out of the second area after traveling for the third duration, prompt that the target vehicle is capable of being controlled to continue to offset to the left side of the current lane in which the target vehicle travels.
S519. If the target vehicle is not located in the second area, the target vehicle is located in a third area, and determine whether the target vehicle has a lane changing intention in the third area.
S520. If the target vehicle has a lane changing intention in the third area, determine whether the target vehicle meets the safe lane changing condition.
S521. If the target vehicle meets the safe lane changing condition in the third area, prompt that the target vehicle is capable of being controlled to change to an adjacent lane on the first side of the first lane.
S522. When the target vehicle does not meet the safe lane changing condition or the target vehicle does not have a lane changing intention in the third area, determine whether the target vehicle has an acceleration intention.
S523. If the target vehicle has an acceleration intention in the third area, determine whether the target vehicle meets the safe acceleration condition.
S524. If the target vehicle meets the safe acceleration condition in the third area, prompt that the target vehicle is capable of being controlled to perform an acceleration operation.
S525. After the target vehicle performs the acceleration operation for second duration, whether the target vehicle has traveled out of the third area; if yes, the acceleration operation ends; or if no, return to perform S523: determine whether the target vehicle meets the safe acceleration condition.
S526. If the target vehicle does not meet the safe acceleration condition or the target vehicle does not have an acceleration intention in the third area, prompt that the target vehicle is capable of being controlled to follow a first projected vehicle, where the first projected vehicle is a vehicle obtained after the first vehicle is projected to the traveling lane of the target vehicle.
S527: End.

In the foregoing description, the related term "third\fourth\fifth\sixth" is merely for distinguishing between similar objects, and does not represent a specific sorting for the objects. It is to be understood that a specific sequence or order for "third\fourth\fifth\sixth" may be interchanged if allowed, which shall not be a limitation on this application.

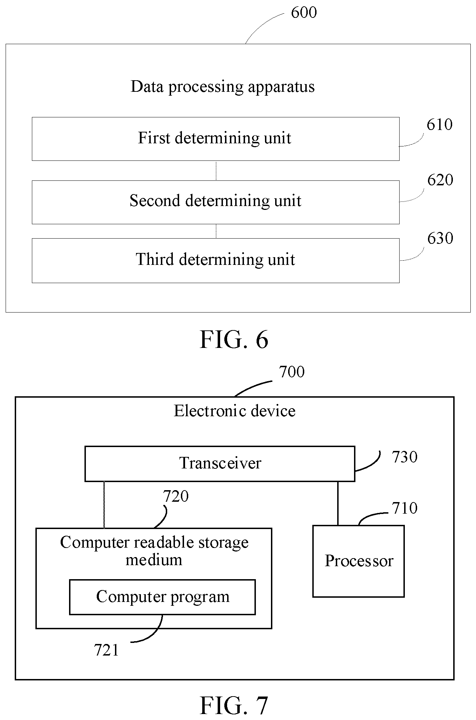

The foregoing describes the method provided in the embodiments of this application, and the following describes a data processing apparatus provided in the embodiments of this application. FIG. 6 is a schematic block diagram of a data processing apparatus 600 according to an embodiment of this application.

As shown in FIG. 6, the data processing apparatus 600 may include some or all of the following content:
a first determining unit 610, configured to determine, based on a position of a first vehicle around a target vehicle, multiple areas around the first vehicle, a longitudinal center line of the first vehicle not coinciding with a center line of a first lane in which the first vehicle travels;
a second determining unit 620, configured to determine, based on a relative position of the target vehicle to the first vehicle, a target area from the multiple areas, in which the target vehicle is located; and
a third determining unit 630, configured to provide a prompt indicating a driving operation for the target vehicle based on the target area.

In some embodiments of this application, the first determining unit 610 may be specifically configured to: determine, based on the position of the first vehicle, a reference line that is in a lateral direction of the first lane and at a first preset distance along a direction opposite to a traveling direction of the first vehicle from a front contour line of the first vehicle, as a first boundary line; and determine a first front area of the first boundary line in the traveling direction of the first vehicle and located in an adjacent lane on a first side of the first lane, the first side of the first lane being opposite to a second side of the first lane towards which the first vehicle deviates laterally; determine a second front area of the first boundary line in the traveling direction of the first vehicle and located in the first lane; obtain a first area in the multiple areas, the first area comprising the first front area, the second front area, and an adjacent lane on the second side of the first lane.

In some embodiments of this application, the third determining unit 630 may be specifically configured to: display, in a case that the target area is the first area, a prompt indicating that the target vehicle is capable of being controlled to keep current traveling status.

In some embodiments of this application, the first determining unit 610 may be further specifically configured to: determine, based on the position of the first vehicle, a reference line that is in a lateral direction of the first lane and at a first preset distance along a direction opposite to a traveling direction of the first vehicle from a front contour line of the first vehicle, as a first boundary line; determine, based on the position of the first vehicle, a reference line that is in a lateral direction of the first lane, and at a second preset distance along a direction opposite to a traveling direction of the first vehicle from a front contour line of the first vehicle as a second boundary line; and determine an area between the first boundary line and the second boundary line and located in an adjacent lane on a second side of the first lane towards which the first vehicle deviates laterally, as a second area in the multiple areas.

In some embodiments of this application, the third determining unit 630 may be further specifically configured to: determine, in a case that the target area is the second area and a first lane changing instruction used for instructing the target vehicle to change to an adjacent lane on a first side of the first lane is obtained, whether the target vehicle meets a safe lane changing condition, the safe lane changing condition representing that both a longitudinal distance between the target vehicle and a second vehicle in the adjacent lane on the first side of the first lane and a longitudinal distance between the target vehicle and a third vehicle in the adjacent lane on the first side of the first lane are greater than a third preset distance, the second vehicle being a vehicle in front of the target vehicle in the traveling direction, and the third vehicle being a vehicle behind the target vehicle in the traveling direction; display, in a case that the target vehicle meets the safe lane changing condition, a prompt indicating that the target vehicle is capable of being controlled to change to the adjacent lane on the first side of the first lane; and display, in a case that the target vehicle does not meet the safe lane changing condition, prompt information indicating that the target vehicle is incapable of being controlled to change to the adjacent lane on the first side of the first lane.

In some embodiments of this application, the third determining unit 630 may be further specifically configured to: determine, in a case that the target area is the second area and an acceleration instruction used for instructing the target vehicle to accelerate is obtained, whether the target vehicle meets a safe acceleration condition, the safe acceleration condition representing that after the target vehicle accelerates at a first acceleration for first duration, a distance between a vehicle in front of the target vehicle and the target vehicle is greater than 0; display, in a case that the target vehicle meets the safe acceleration condition, prompt information used for prompting that the target vehicle is capable of being controlled to perform an acceleration operation; and display, in a case that the target vehicle does not meet the safe acceleration condition, prompt information used for prompting that the target vehicle is incapable of being controlled to perform an acceleration operation.

In some embodiments of this application, the third determining unit 630 may be further specifically configured to: determine, in a case that the target vehicle meets the safe acceleration condition, whether the target vehicle is to travel out of the second area after traveling for the first duration; and redetermine, in a case that the target vehicle does not travel out of the second area, whether the target vehicle meets the safe acceleration condition.

In all embodiments of the present disclosure, the apparatus is further configured to: prompt, in a case that the target vehicle has traveled out of the second area, that the target vehicle is capable of being controlled to follow a vehicle ahead in a traveling lane of the target vehicle.

In some embodiments of this application, the third determining unit 630 may be further specifically configured to: prompt, in a case that the target area is the second area and an offset instruction used for instructing the target vehicle to deviate laterally towards a second side of a current lane in which the target vehicle is traveling is obtained, that the target vehicle is capable of being controlled to deviate laterally towards the second side of the current lane.

In some embodiments of this application, the first determining unit 610 may be further specifically configured to: determine, based on the position of the first vehicle, a reference line that is in a lateral direction of the first lane and at a second preset distance along a direction opposite to a traveling direction of the first vehicle from a front contour line of the first vehicle, as a second boundary line; and determine a rear area in an adjacent lane on a second side of the first lane towards which the first vehicle deviates laterally and behind the second boundary line as a third area in the multiple areas.

In some embodiments of this application, the third determining unit 630 may be further specifically configured to: determine, in a case that the target area is the third area and a second lane changing instruction used for instructing the target vehicle to change to an adjacent lane on a first side of the first lane is obtained, whether the target vehicle meets a safe lane changing condition, the safe lane changing condition representing that both a longitudinal distance between the target vehicle and a fourth vehicle in the adjacent lane on the first side of the first lane and a longitudinal distance between the target vehicle and a fifth vehicle in the adjacent lane on a first side of the first lane are greater than a fourth preset distance, the fourth vehicle being a vehicle in front of the target vehicle in the traveling direction of the target vehicle, and the fifth vehicle being a vehicle behind the target vehicle in the traveling direction of the target vehicle; display, in a case that the target vehicle meets the safe lane changing condition, a prompt indicating that the target vehicle is capable of being controlled to change to the adjacent lane on the first side of the first lane; and display, in a case that the target vehicle does not meet the safe lane changing condition, a prompt indicating that the target vehicle is incapable of being controlled to change to the adjacent lane on the first side of the first lane.

In some embodiments of this application, the third determining unit 630 may be further specifically configured to: determine, in a case that the target area is the third area and an acceleration instruction used for instructing the target vehicle to accelerate is obtained, whether the target vehicle meets a safe acceleration condition, the safe acceleration condition being used for representing that after the target vehicle accelerates at a second acceleration for second duration, a distance between a vehicle in front of the target vehicle and the target vehicle is greater than 0; display, in a case that the target vehicle meets the safe acceleration condition, prompt information used for prompting that the target vehicle is capable of being controlled to perform an acceleration operation; and display, in a case that the target vehicle does not meet the safe acceleration condition, prompt information used for prompting that the target vehicle is incapable of being controlled to perform an acceleration operation.

In some embodiments of this application, the third determining unit 630 may be further specifically configured to: determine, in a case that the target vehicle meets the safe acceleration condition, whether the target vehicle travels out of the third area after the second duration; and redetermine, in a case that the target vehicle does not travel out of the third area, whether the target vehicle meets the safe acceleration condition.

In some embodiments of this application, the third determining unit 630 may be further specifically configured to: project, in a case that the target area is the third area, the first vehicle to the lane in which the target vehicle is located, to obtain a first projected vehicle; and prompt that the target vehicle is capable of being controlled to follow the first projected vehicle, where that the target vehicle follows the first projected vehicle represents that a distance between the target vehicle and the first projected vehicle is greater than or equal to the fifth preset distance in the driving process.

In all embodiments of the present disclosure, the apparatus is further configured to: prompt, in a case that the target vehicle has traveled out of the third area, that the target vehicle is capable of being controlled to follow a vehicle ahead in a traveling lane of the target vehicle.

In some embodiments of this application, the first determining unit 610 may be further specifically configured to: determine, based on the position of the first vehicle, a reference line that is in a lateral direction of the first lane and at a first preset distance along a direction opposite to a traveling direction of the first vehicle from a front contour line of the first vehicle, as a first boundary line; and determine a rear area of the first boundary line in the first lane in which the first vehicle is currently traveling as a fourth area in the multiple areas;. In some embodiments of this application, the third determining unit 630 may be further specifically configured to: display, in a case that the target area is the fourth area, prompt information used for prompting that the target vehicle is capable of being controlled to follow the first vehicle.

It is to be understood that the data processing apparatus embodiment and the method embodiment may be corresponding to each other. For similar description, references may be made to the method embodiment. To avoid repetition, details are not described herein again. Specifically, the data processing apparatus 600 may be corresponding to a corresponding body in the method 300 and the method 500 in the embodiments of this application, and each unit in the data processing apparatus 600 is separately used for implementing a corresponding procedure in the method 300 and the method 500. For brevity, details are not described herein again.

It is to be further understood that the units in the data processing apparatus 600 in this embodiment of this application may be separately combined or all combined into one or several other units, or one (or more) of the units herein may further be divided into multiple units of smaller functions. In this way, the same operations can be implemented, and implementation of the technical effects of the embodiments of this application is not affected. The foregoing units are divided based on logical functions. In an actual application, a function of one unit may be implemented by multiple units, or functions of multiple units are implemented by one unit. In another embodiment of this application, the data processing apparatus 600 may alternatively include other units. In actual application, these functions may be implemented with the assistance of other units, and may be cooperatively implemented by multiple units. According to another embodiment of this application, a computer program (including program code) that can execute steps involved in a corresponding method may be run on a general-purpose computing device that includes a processing element such as a central processing unit (CPU), a random access storage medium (RAM), a read-only storage medium (ROM), and a storage element, so as to construct the data processing apparatus 600 in the embodiment of this application and implement the data processing method in the embodiment of this application. The computer program may be recorded in, for example, a computer readable storage medium, and is installed in an electronic device by using the computer readable storage medium, so as to implement a corresponding method in the embodiment of this application.

In other words, the foregoing units may be implemented in a hardware form, may be implemented in an instruction in a software form, or may be implemented in a combination of software and hardware. Specifically, the steps of the method embodiments in this application may be completed by using an integrated logic circuit of hardware in a processor and/or an instruction in a form of software. The steps of the method disclosed with reference to the embodiments of this application may be directly performed by a hardware decoding processor, or may be performed by using a combination of hardware and software in a decoding processor. In all embodiments of the present disclosure, the software may be located in a storage medium that is mature in the art, such as a random access memory, a flash memory, a read-only memory, a programmable read-only memory, an electrically erasable programmable memory, or a register. The storage medium is located in the memory. The processor reads information in the memory and completes the steps of the method embodiments in combination with hardware thereof.

FIG. 7 is a schematic structural diagram of an electronic device 700 according to an embodiment of this application.

As shown in FIG. 7, the electronic device 700 includes at least a processor 710 and a computer readable storage medium 720. The processor 710 and the computer readable storage medium 720 may be connected by using a bus or in another manner. The computer readable storage medium 720 is configured to store a computer program 721. The computer program 721 includes a computer instruction. The processor 710 is configured to execute the computer instruction stored in the computer readable storage medium 720. The processor 710 is a computing core and a control core of the electronic device 700, and is adapted to implement one or more computer instructions, and is specifically adapted to load and execute one or more computer instructions, so as to implement a corresponding method procedure or a corresponding function.

As an example, the processor 710 may also be referred to as a central processing unit (CPU). The processor 710 may include but is not limited to: a general purpose processor, a digital signal processor (DSP), an application-specific integrated circuit (ASIC), a field programmable gate array (FPGA) or another programmable logic device, a discrete gate or a transistor logic device, a discrete hardware component, or the like.

As an example, the computer readable storage medium 720 herein may be a highspeed RAM memory, or may be a non-volatile memory, for example, at least one disk memory. In all embodiments of the present disclosure, the computer readable storage medium may be at least one computer readable storage medium located far away from the foregoing processor 710. Specifically, the computer readable storage medium 720 includes but is not limited to: a volatile memory and/or a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM) serving as an external cache. Through illustrative but not limited description, RAMs in many forms, for example, a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DRRAM), are available.

In an implementation, the electronic device 700 may be the data processing apparatus 600 shown in FIG. 6. The computer readable storage medium 720 stores a computer instruction. The processor 710 loads and executes the computer instruction stored in the computer readable storage medium 720, so as to implement corresponding steps in the method embodiments shown in FIG. 3 and FIG. 5. In specific implementation, the computer instruction in the computer readable storage medium 720 is loaded by the processor 710 to perform a corresponding step. To avoid repetition, details are not described herein again.

According to another aspect of this application, an embodiment of this application further provides a computer readable storage medium (Memory), where the computer readable storage medium is a memory device in the electronic device 700, and is configured to store a program and data, for example, the computer readable storage medium 720. It may be understood that the computer readable storage medium 720 herein may include a built-in storage medium in the electronic device 700, and certainly may also include an extended storage medium supported by the electronic device 700. The computer readable storage medium provides storage space, and the storage space stores an operating system of the electronic device 700. In addition, one or more computer instructions suitable for being loaded and executed by the processor 710 are further stored in the storage space. These computer instructions may be one or more computer programs 721 (including program code).

The electronic device 700 may further include: a transceiver 730, where the transceiver 730 may be connected to the processor 710 or the computer readable storage medium 720.

The computer readable storage medium 720 may control the transceiver 730 to communicate with another device, specifically, may send information or data to another device, or receive information or data sent by another device. The transceiver 730 may include a transmitter and a receiver. The transceiver 730 may further include an antenna, and a quantity of antennas may be one or more.

According to another aspect of this application, a computer program product or a computer program is provided, the computer program product or the computer program including computer instructions, the computer instructions being stored in a computer readable storage medium, for example, the computer program 721. In this case, the electronic device 700 may be a computer. The processor 710 reads the computer instruction from the computer readable storage medium 720, and the processor 710 executes the computer instruction, so that the computer performs the data processing method provided in the foregoing optional manners.

In other words, when software is used for implementation, implementation may be entirely or partially performed in the form of a computer program product. The computer program product includes one or more computer instructions. When the computer program instruction is loaded and executed on the computer, a process of the embodiments of this application is completely or partially run or a function of the embodiments of this application is implemented. The computer may be a general-purpose computer, a special-purpose computer, a computer network, or another programmable apparatus. The computer instruction may be stored in a computer readable storage medium or transmitted from one computer readable storage medium to another computer readable storage medium. For example, the computer instruction may be transmitted from one website, computer, server or data center to another website, computer, server or data center in a wired (for example, a coaxial cable, an optical fiber or a digital subscriber line (DSL)) or wireless (for example, infrared, wireless or microwave) manner.

A person of ordinary skill in the art may notice that the exemplary units and flow steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. Those skilled in the art may use different methods to implement the described functions for each particular application, but such implementation is not to be considered beyond the scope of this application.

## Claims

1. A data processing method, comprising:
determining (S301), based on a position of a first vehicle around a target vehicle, multiple areas around the first vehicle, wherein a longitudinal center line of the first vehicle does not coincide with a center line of a first lane in which the first vehicle travels;
determining (S302), based on a relative position of the target vehicle to the first vehicle, a target area from the multiple areas, in which the target vehicle is located; and
providing (S303) a prompt indicating a driving operation for the target vehicle based on the target area;
the method further comprises at least one of the following items (i) to (ii):
(i) wherein the determining (S301), based on the position of the first vehicle around the target vehicle, the multiple areas around the first vehicle comprises:
determining, based on the position of the first vehicle, a reference line that is in a lateral direction of the first lane and at a first preset distance along a direction opposite to a traveling direction of the first vehicle from a front contour line of the first vehicle, as a first boundary line; and
the determining (S301) further comprises: at least one of the following items (a) to (c)
(a) determining a first front area of the first boundary line in the traveling direction of the first vehicle and located in an adjacent lane on a first side of the first lane, the first side of the first lane being opposite to a second side of the first lane towards which the first vehicle deviates laterally;
determining a second front area of the first boundary line in the traveling direction of the first vehicle and located in the first lane;
obtaining a first area in the multiple areas, the first area comprising the first front area, the second front area, and an adjacent lane on the second side of the first lane;
wherein the providing (S303) the prompt indicating the driving operation for the target vehicle based on the target area comprises:
displaying, in a case that the target area is the first area, a prompt indicating that the target vehicle is capable of being controlled to keep current traveling status
(b) determining, based on the position of the first vehicle, a reference line that is in a lateral direction of the first lane and at a second preset distance along a direction opposite to a traveling direction of the first vehicle from a front contour line of the first vehicle as a second boundary line; and
determining an area between the first boundary line and the second boundary line and located in an adjacent lane on a second side of the first lane towards which the first vehicle deviates laterally, as a second area in the multiple areas;
(c) determining a rear area of the first boundary line in the first lane in which the first vehicle is currently traveling as a fourth area in the multiple areas;
wherein the providing (S303) the prompt indicating the driving operation for the target vehicle comprises:
displaying, in a case that the target area is the fourth area, a prompt indicating that the target vehicle is capable of being controlled to follow the first vehicle;
(ii) wherein the determining (S301), based on the position of the first vehicle around the target vehicle, the multiple areas around the first vehicle comprises:
determining, based on the position of the first vehicle, a reference line that is in a lateral direction of the first lane and at a second preset distance along a direction opposite to a traveling direction of the first vehicle from a front contour line of the first vehicle, as a second boundary line; and
determining a rear area in an adjacent lane on a second side of the first lane towards which the first vehicle deviates laterally and behind the second boundary line as a third area in the multiple areas.

2. The method according to claim 1, wherein the providing (S303) the prompt indicating the driving operation for the target vehicle based on the target area comprises:
determining, in a case that the target area is the second area and a first lane changing instruction used for instructing the target vehicle to change to an adjacent lane on the first side of the first lane is obtained, whether the target vehicle meets a safe lane changing condition, the safe lane changing condition representing that both a longitudinal distance between the target vehicle and a second vehicle in the adjacent lane on the first side of the first lane and a longitudinal distance between the target vehicle and a third vehicle in the adjacent lane on the first side of the first lane are greater than a third preset distance, the second vehicle being a vehicle in front of the target vehicle in the traveling direction, and the third vehicle being a vehicle behind the target vehicle in the traveling direction;
displaying, in a case that the target vehicle meets the safe lane changing condition, a prompt indicating that the target vehicle is capable of being controlled to change to the adjacent lane on the first side of the first lane; and
displaying, in a case that the target vehicle does not meet the safe lane changing condition, prompt information indicating that the target vehicle is incapable of being controlled to change to the adjacent lane on the first side of the first lane.

3. The method according to claim 1, wherein the providing (S303) the prompt indicating the driving operation for the target vehicle based on the target area comprises:
determining, in a case that the target area is the second area and an acceleration instruction used for instructing the target vehicle to accelerate is obtained, whether the target vehicle meets a safe acceleration condition, the safe acceleration condition representing that after the target vehicle accelerates at a first acceleration for first duration, a distance between a vehicle in front of the target vehicle and the target vehicle is greater than 0;
displaying, in a case that the target vehicle meets the safe acceleration condition, a prompt indicating that the target vehicle is capable of being controlled to perform an acceleration operation; and
displaying, in a case that the target vehicle does not meet the safe acceleration condition, a prompt indicating that the target vehicle is incapable of being controlled to perform an acceleration operation.

4. The method according to claim 3, wherein the method further comprises:
determining, in a case that the target vehicle meets the safe acceleration condition, whether the target vehicle is to travel out of the second area after traveling for the first duration; and
redetermining, in a case that the target vehicle does not travel out of the second area, whether the target vehicle meets the safe acceleration condition.

5. The method according to claim 4, wherein the method further comprises: prompting, in a case that the target vehicle has traveled out of the second area, that the target vehicle is capable of being controlled to follow a vehicle ahead in a traveling lane of the target vehicle.

6. The method according to claim 1, wherein the providing (S303) the prompt indicating the driving operation for the target vehicle based on the target area comprises:
prompting, in a case that the target area is the second area and an offset instruction used for instructing the target vehicle to deviate laterally towards a second side of a current lane in which the target vehicle is traveling is obtained, that the target vehicle is capable of being controlled to deviate laterally towards the second side of the current lane.

7. The method according to claim 1, wherein the providing (S303) the prompt indicating the driving operation for the target vehicle based on the target area comprises:
determining, in a case that the target area is the third area and a second lane changing instruction used for instructing the target vehicle to change to an adjacent lane on a first side of the first lane is obtained, whether the target vehicle meets a safe lane changing condition, the safe lane changing condition representing that both a longitudinal distance between the target vehicle and a fourth vehicle in the adjacent lane on the first side of the first lane and a longitudinal distance between the target vehicle and a fifth vehicle in the adjacent lane on a first side of the first lane are greater than a fourth preset distance, the fourth vehicle being a vehicle in front of the target vehicle in the traveling direction of the target vehicle, and the fifth vehicle being a vehicle behind the target vehicle in the traveling direction of the target vehicle;
displaying, in a case that the target vehicle meets the safe lane changing condition, a prompt indicating that the target vehicle is capable of being controlled to change to the adjacent lane on the first side of the first lane; and
displaying, in a case that the target vehicle does not meet the safe lane changing condition, a prompt indicating that the target vehicle is incapable of being controlled to change to the adjacent lane on the first side of the first lane.

8. The method according to claim 7, wherein the providing (S303) the prompt indicating the driving operation for the target vehicle based on the target area comprises:
determining, in a case that the target area is the third area and an acceleration instruction used for instructing the target vehicle to accelerate is obtained, whether the target vehicle meets a safe acceleration condition, the safe acceleration condition being used for representing that after the target vehicle accelerates at a second acceleration for second duration, a distance between a vehicle in front of the target vehicle and the target vehicle is greater than 0;
displaying, in a case that the target vehicle meets the safe acceleration condition, a prompt indicating that the target vehicle is capable of being controlled to perform an acceleration operation; and
displaying, in a case that the target vehicle does not meet the safe acceleration condition, a prompt indicating that the target vehicle is incapable of being controlled to perform an acceleration operation.

9. The method according to claim 8, wherein the method further comprises:
determining, in a case that the target vehicle meets the safe acceleration condition, whether the target vehicle travels out of the third area after the second duration; and
redetermining, in a case that the target vehicle does not travel out of the third area, whether the target vehicle meets the safe acceleration condition;
prompting, in a case that the target vehicle has traveled out of the third area, that the target vehicle is capable of being controlled to follow a vehicle ahead in a traveling lane of the target vehicle.

10. An electronic device, comprising:
a processor, adapted to execute a computer program; and
a computer readable storage medium, the computer readable storage medium storing a computer program, and when the computer program is executed by the processor, the method according to any one of claims 1 to 9 being implemented.

11. A computer readable storage medium, configured to store a computer program that causes a computer to perform the method according to any one of claims 1 to 9.

## Patentansprüche

1. Datenverarbeitungsverfahren, umfassend:
Bestimmen (S301), auf der Grundlage einer Position eines ersten Fahrzeugs um ein Zielfahrzeug herum, mehrerer Bereiche um das erste Fahrzeug herum, wobei eine Längsmittellinie des ersten Fahrzeugs nicht mit einer Mittellinie einer ersten Fahrspur, auf der das erste Fahrzeug fährt, zusammenfällt;
Bestimmen (S302), auf der Grundlage einer relativen Position des Zielfahrzeugs zum ersten Fahrzeug, eines Zielbereichs aus den mehreren Bereichen, in dem sich das Zielfahrzeug befindet; und
Bereitstellen (S303) einer Aufforderung, die einen Fahrvorgang für das Zielfahrzeug auf der Grundlage des Zielbereichs angibt;
wobei das Verfahren ferner mindestens eines der folgenden Elemente (i) bis (ii) umfasst:
(i) wobei das Bestimmen (S301), auf der Grundlage der Position des ersten Fahrzeugs um das Zielfahrzeug herum, der mehreren Bereiche um das erste Fahrzeug herum umfasst:
Bestimmen, auf der Grundlage der Position des ersten Fahrzeugs, einer Bezugslinie, die in einer Querrichtung der ersten Fahrspur und in einem ersten voreingestellten Abstand entlang einer Richtung entgegengesetzt zu einer Fahrtrichtung des ersten Fahrzeugs von einer vorderen Konturlinie des ersten Fahrzeugs liegt, als eine erste Begrenzungslinie; und
wobei das Bestimmen (S301) ferner umfasst: mindestens eines der folgenden Elemente (a) bis (c)
(a) Bestimmen eines ersten vorderen Bereichs der ersten Begrenzungslinie in der Fahrtrichtung des ersten Fahrzeugs, der sich in einer benachbarten Fahrspur auf einer ersten Seite der ersten Fahrspur befindet, wobei die erste Seite der ersten Fahrspur einer zweiten Seite der ersten Fahrspur, zu der hin das erste Fahrzeug seitlich abweicht, entgegengesetzt ist;
Bestimmen eines zweiten vorderen Bereichs der ersten Begrenzungslinie in der Fahrtrichtung des ersten Fahrzeugs, der sich in der ersten Fahrspur befindet;
Erhalten eines ersten Bereichs aus den mehreren Bereichen, wobei der erste Bereich den ersten vorderen Bereich, den zweiten vorderen Bereich und eine benachbarte Fahrspur auf der zweiten Seite der ersten Fahrspur umfasst;
wobei das Bereitstellen (S303) der Aufforderung, die den Fahrvorgang für das Zielfahrzeug auf der Grundlage des Zielbereichs angibt, umfasst:
Anzeigen, in einem Fall, in dem der Zielbereich der erste Bereich ist, einer Aufforderung, die angibt, dass das Zielfahrzeug so gesteuert werden kann, dass es den aktuellen Fahrzustand beibehält
(b) Bestimmen, auf der Grundlage der Position des ersten Fahrzeugs, einer Bezugslinie, die in einer Querrichtung der ersten Fahrspur und in einem zweiten voreingestellten Abstand entlang einer Richtung entgegengesetzt zu einer Fahrtrichtung des ersten Fahrzeugs von einer vorderen Konturlinie des ersten Fahrzeugs liegt, als eine zweite Begrenzungslinie; und
Bestimmen eines Bereichs zwischen der ersten Begrenzungslinie und der zweiten Begrenzungslinie, der sich in einer benachbarten Fahrspur auf einer zweiten Seite der ersten Fahrspur, zu der hin das erste Fahrzeug seitlich abweicht, befindet, als einen zweiten Bereich aus den mehreren Bereichen;
(c) Bestimmen eines hinteren Bereichs der ersten Begrenzungslinie in der ersten Fahrspur, auf der das erste Fahrzeug aktuell fährt, als einen vierten Bereich aus den mehreren Bereichen;
wobei das Bereitstellen (S303) der Aufforderung, die den Fahrvorgang für das Zielfahrzeug angibt, umfasst:
Anzeigen, in einem Fall, in dem der Zielbereich der vierte Bereich ist, einer Aufforderung, die angibt, dass das Zielfahrzeug so gesteuert werden kann, dass es dem ersten Fahrzeug folgt;
(ii) wobei das Bestimmen (S301), auf der Grundlage der Position des ersten Fahrzeugs um das Zielfahrzeug herum, der mehreren Bereiche um das erste Fahrzeug herum umfasst:
Bestimmen, auf der Grundlage der Position des ersten Fahrzeugs, einer Bezugslinie, die in einer Querrichtung der ersten Fahrspur und in einem zweiten voreingestellten Abstand entlang einer Richtung entgegengesetzt zu einer Fahrtrichtung des ersten Fahrzeugs von einer vorderen Konturlinie des ersten Fahrzeugs liegt, als eine zweite Begrenzungslinie; und
Bestimmen eines hinteren Bereichs in einer benachbarten Fahrspur auf einer zweiten Seite der ersten Fahrspur, zu der hin das erste Fahrzeug seitlich abweicht, und hinter der zweiten Begrenzungslinie als einen dritten Bereich aus den mehreren Bereichen.

2. Verfahren nach Anspruch 1, wobei das Bereitstellen (S303) der Aufforderung, die den Fahrvorgang für das Zielfahrzeug auf der Grundlage des Zielbereichs angibt, umfasst:
Bestimmen, in einem Fall, in dem der Zielbereich der zweite Bereich ist und eine erste Fahrspurwechselanweisung, die zum Anweisen des Zielfahrzeugs, auf eine benachbarte Fahrspur auf der ersten Seite der ersten Fahrspur zu wechseln, verwendet wird, erhalten wird, ob das Zielfahrzeug eine sichere Fahrspurwechselbedingung erfüllt, wobei die sichere Fahrspurwechselbedingung darstellt, dass sowohl ein Längsabstand zwischen dem Zielfahrzeug und einem zweiten Fahrzeug in der benachbarten Fahrspur auf der ersten Seite der ersten Fahrspur als auch ein Längsabstand zwischen dem Zielfahrzeug und einem dritten Fahrzeug in der benachbarten Fahrspur auf der ersten Seite der ersten Fahrspur größer als ein dritter voreingestellter Abstand sind, wobei das zweite Fahrzeug ein Fahrzeug vor dem Zielfahrzeug in der Fahrtrichtung ist und das dritte Fahrzeug ein Fahrzeug hinter dem Zielfahrzeug in der Fahrtrichtung ist;
Anzeigen, in einem Fall, in dem das Zielfahrzeug die sichere Fahrspurwechselbedingung erfüllt, einer Aufforderung, die angibt, dass das Zielfahrzeug so gesteuert werden kann, dass es auf die benachbarte Fahrspur auf der ersten Seite der ersten Fahrspur wechselt; und
Anzeigen, in einem Fall, in dem das Zielfahrzeug die sichere Fahrspurwechselbedingung nicht erfüllt, von Aufforderungsinformationen, die angeben, dass das Zielfahrzeug nicht so gesteuert werden kann, dass es auf die benachbarte Fahrspur auf der ersten Seite der ersten Fahrspur wechselt.

3. Verfahren nach Anspruch 1, wobei das Bereitstellen (S303) der Aufforderung, die den Fahrvorgang für das Zielfahrzeug auf der Grundlage des Zielbereichs angibt, umfasst:
Bestimmen, in einem Fall, in dem der Zielbereich der zweite Bereich ist und eine Beschleunigungsanweisung, die zum Anweisen des Zielfahrzeugs zu beschleunigen verwendet wird, erhalten wird, ob das Zielfahrzeug eine sichere Beschleunigungsbedingung erfüllt, wobei die sichere Beschleunigungsbedingung darstellt, dass, nachdem das Zielfahrzeug mit einer ersten Beschleunigung für eine erste Dauer beschleunigt, ein Abstand zwischen einem Fahrzeug vor dem Zielfahrzeug und dem Zielfahrzeug größer als 0 ist;
Anzeigen, in einem Fall, in dem das Zielfahrzeug die sichere Beschleunigungsbedingung erfüllt, einer Aufforderung, die angibt, dass das Zielfahrzeug so gesteuert werden kann, dass es einen Beschleunigungsvorgang durchführt; und
Anzeigen, in einem Fall, in dem das Zielfahrzeug die sichere Beschleunigungsbedingung nicht erfüllt, einer Aufforderung, die angibt, dass das Zielfahrzeug nicht so gesteuert werden kann, dass es einen Beschleunigungsvorgang durchführt.

4. Verfahren nach Anspruch 3, wobei das Verfahren ferner umfasst:
Bestimmen, in einem Fall, in dem das Zielfahrzeug die sichere Beschleunigungsbedingung erfüllt, ob das Zielfahrzeug nach dem Fahren für die erste Dauer aus dem zweiten Bereich herausfahren wird; und
erneutes Bestimmen, in einem Fall, in dem das Zielfahrzeug nicht aus dem zweiten Bereich herausfährt, ob das Zielfahrzeug die sichere Beschleunigungsbedingung erfüllt.

5. Verfahren nach Anspruch 4, wobei das Verfahren ferner umfasst: Auffordern, in einem Fall, in dem das Zielfahrzeug aus dem zweiten Bereich herausgefahren ist, dass das Zielfahrzeug so gesteuert werden kann, dass es einem vorausfahrenden Fahrzeug in einer Fahrspur des Zielfahrzeugs folgt.

6. Verfahren nach Anspruch 1, wobei das Bereitstellen (S303) der Aufforderung, die den Fahrvorgang für das Zielfahrzeug auf der Grundlage des Zielbereichs angibt, umfasst:
Auffordern, in einem Fall, in dem der Zielbereich der zweite Bereich ist und eine Versatzanweisung, die zum Anweisen des Zielfahrzeugs, seitlich zu einer zweiten Seite einer aktuellen Fahrspur, auf der das Zielfahrzeug fährt, abzuweichen, verwendet wird, erhalten wird, dass das Zielfahrzeug so gesteuert werden kann, dass es seitlich zur zweiten Seite der aktuellen Fahrspur abweicht.

7. Verfahren nach Anspruch 1, wobei das Bereitstellen (S303) der Aufforderung, die den Fahrvorgang für das Zielfahrzeug auf der Grundlage des Zielbereichs angibt, umfasst:
Bestimmen, in einem Fall, in dem der Zielbereich der dritte Bereich ist und eine zweite Fahrspurwechselanweisung, die zum Anweisen des Zielfahrzeugs, auf eine benachbarte Fahrspur auf einer ersten Seite der ersten Fahrspur zu wechseln, verwendet wird, erhalten wird, ob das Zielfahrzeug eine sichere Fahrspurwechselbedingung erfüllt, wobei die sichere Fahrspurwechselbedingung darstellt, dass sowohl ein Längsabstand zwischen dem Zielfahrzeug und einem vierten Fahrzeug in der benachbarten Fahrspur auf der ersten Seite der ersten Fahrspur als auch ein Längsabstand zwischen dem Zielfahrzeug und einem fünften Fahrzeug in der benachbarten Fahrspur auf einer ersten Seite der ersten Fahrspur größer als ein vierter voreingestellter Abstand sind, wobei das vierte Fahrzeug ein Fahrzeug vor dem Zielfahrzeug in der Fahrtrichtung des Zielfahrzeugs ist und das fünfte Fahrzeug ein Fahrzeug hinter dem Zielfahrzeug in der Fahrtrichtung des Zielfahrzeugs ist;
Anzeigen, in einem Fall, in dem das Zielfahrzeug die sichere Fahrspurwechselbedingung erfüllt, einer Aufforderung, die angibt, dass das Zielfahrzeug so gesteuert werden kann, dass es auf die benachbarte Fahrspur auf der ersten Seite der ersten Fahrspur wechselt; und
Anzeigen, in einem Fall, in dem das Zielfahrzeug die sichere Fahrspurwechselbedingung nicht erfüllt, einer Aufforderung, die angibt, dass das Zielfahrzeug nicht so gesteuert werden kann, dass es auf die benachbarte Fahrspur auf der ersten Seite der ersten Fahrspur wechselt.

8. Verfahren nach Anspruch 7, wobei das Bereitstellen (S303) der Aufforderung, die den Fahrvorgang für das Zielfahrzeug auf der Grundlage des Zielbereichs angibt, umfasst:
Bestimmen, in einem Fall, in dem der Zielbereich der dritte Bereich ist und eine Beschleunigungsanweisung, die zum Anweisen des Zielfahrzeugs zu beschleunigen verwendet wird, erhalten wird, ob das Zielfahrzeug eine sichere Beschleunigungsbedingung erfüllt, wobei die sichere Beschleunigungsbedingung dazu verwendet wird, darzustellen, dass, nachdem das Zielfahrzeug mit einer zweiten Beschleunigung für eine zweite Dauer beschleunigt, ein Abstand zwischen einem Fahrzeug vor dem Zielfahrzeug und dem Zielfahrzeug größer als 0 ist;
Anzeigen, in einem Fall, in dem das Zielfahrzeug die sichere Beschleunigungsbedingung erfüllt, einer Aufforderung, die angibt, dass das Zielfahrzeug so gesteuert werden kann, dass es einen Beschleunigungsvorgang durchführt; und
Anzeigen, in einem Fall, in dem das Zielfahrzeug die sichere Beschleunigungsbedingung nicht erfüllt, einer Aufforderung, die angibt, dass das Zielfahrzeug nicht so gesteuert werden kann, dass es einen Beschleunigungsvorgang durchführt.

9. Verfahren nach Anspruch 8, wobei das Verfahren ferner umfasst:
Bestimmen, in einem Fall, in dem das Zielfahrzeug die sichere Beschleunigungsbedingung erfüllt, ob das Zielfahrzeug nach der zweiten Dauer aus dem dritten Bereich herausfährt; und
erneutes Bestimmen, in einem Fall, in dem das Zielfahrzeug nicht aus dem dritten Bereich herausfährt, ob das Zielfahrzeug die sichere Beschleunigungsbedingung erfüllt;
Auffordern, in einem Fall, in dem das Zielfahrzeug aus dem dritten Bereich herausgefahren ist, dass das Zielfahrzeug so gesteuert werden kann, dass es einem vorausfahrenden Fahrzeug in einer Fahrspur des Zielfahrzeugs folgt.

10. Elektronische Vorrichtung, umfassend:
einen Prozessor, der dazu ausgelegt ist, ein Computerprogramm auszuführen; und
ein computerlesbares Speichermedium, wobei das computerlesbare Speichermedium ein Computerprogramm speichert und, wenn das Computerprogramm durch den Prozessor ausgeführt wird, das Verfahren nach einem der Ansprüche 1 bis 9 implementiert wird.

11. Computerlesbares Speichermedium, das dazu konfiguriert ist, ein Computerprogramm zu speichern, das einen Computer veranlasst, das Verfahren nach einem der Ansprüche 1 bis 9 durchzuführen.

## Revendications

1. Procédé de traitement de données, comprenant :
la détermination (S301), sur la base d'une position d'un premier véhicule autour d'un véhicule cible, de multiples zones autour du premier véhicule, dans lequel une ligne médiane longitudinale du premier véhicule ne coïncide pas avec une ligne médiane d'une première voie sur laquelle le premier véhicule circule ;
la détermination (S302), sur la base d'une position relative du véhicule cible par rapport au premier véhicule, d'une zone cible parmi les multiples zones, dans laquelle le véhicule cible est situé ; et
la fourniture (S303) d'une invite indiquant une opération de conduite pour le véhicule cible sur la base de la zone cible ;
le procédé comprend en outre au moins l'un des éléments suivants (i) à (ii) :
(i) dans lequel la détermination (S301), sur la base de la position du premier véhicule autour du véhicule cible, des multiples zones autour du premier véhicule comprend :
la détermination, sur la base de la position du premier véhicule, d'une ligne de référence qui est dans une direction latérale de la première voie et à une première distance prédéfinie le long d'une direction opposée à une direction de circulation du premier véhicule à partir d'une ligne de contour avant du premier véhicule, en tant que première ligne de délimitation ; et
la détermination (S301) comprend en outre : au moins l'un des éléments suivants (a) à (c)
(a) la détermination d'une première zone avant de la première ligne de délimitation dans la direction de circulation du premier véhicule et située dans une voie adjacente sur un premier côté de la première voie, le premier côté de la première voie étant opposé à un second côté de la première voie vers lequel le premier véhicule dévie latéralement ;
la détermination d'une deuxième zone avant de la première ligne de délimitation dans la direction de circulation du premier véhicule et située dans la première voie ;
l'obtention d'une première zone parmi les multiples zones, la première zone comprenant la première zone avant, la deuxième zone avant, et une voie adjacente sur le second côté de la première voie ;
dans lequel la fourniture (S303) de l'invite indiquant l'opération de conduite pour le véhicule cible sur la base de la zone cible comprend :
l'affichage, dans un cas où la zone cible est la première zone, d'une invite indiquant que le véhicule cible est apte à être commandé pour conserver l'état de circulation actuel
(b) la détermination, sur la base de la position du premier véhicule, d'une ligne de référence qui est dans une direction latérale de la première voie et à une deuxième distance prédéfinie le long d'une direction opposée à une direction de circulation du premier véhicule à partir d'une ligne de contour avant du premier véhicule en tant que deuxième ligne de délimitation ; et
la détermination d'une zone entre la première ligne de délimitation et la deuxième ligne de délimitation et située dans une voie adjacente sur un second côté de la première voie vers lequel le premier véhicule dévie latéralement, en tant que deuxième zone parmi les multiples zones ;
(c) la détermination d'une zone arrière de la première ligne de délimitation dans la première voie sur laquelle le premier véhicule circule actuellement en tant que quatrième zone parmi les multiples zones ;
dans lequel la fourniture (S303) de l'invite indiquant l'opération de conduite pour le véhicule cible comprend :
l'affichage, dans un cas où la zone cible est la quatrième zone, d'une invite indiquant que le véhicule cible est apte à être commandé pour suivre le premier véhicule ;
(ii) dans lequel la détermination (S301), sur la base de la position du premier véhicule autour du véhicule cible, des multiples zones autour du premier véhicule comprend :
la détermination, sur la base de la position du premier véhicule, d'une ligne de référence qui est dans une direction latérale de la première voie et à une deuxième distance prédéfinie le long d'une direction opposée à une direction de circulation du premier véhicule à partir d'une ligne de contour avant du premier véhicule, en tant que deuxième ligne de délimitation ; et
la détermination d'une zone arrière dans une voie adjacente sur un second côté de la première voie vers lequel le premier véhicule dévie latéralement et derrière la deuxième ligne de délimitation en tant que troisième zone parmi les multiples zones.

2. Procédé selon la revendication 1, dans lequel la fourniture (S303) de l'invite indiquant l'opération de conduite pour le véhicule cible sur la base de la zone cible comprend :
la détermination, dans un cas où la zone cible est la deuxième zone et où une première instruction de changement de voie utilisée pour ordonner au véhicule cible de changer vers une voie adjacente sur le premier côté de la première voie est obtenue, du fait que le véhicule cible satisfait ou non une condition de changement de voie sûr, la condition de changement de voie sûr représentant que tant une distance longitudinale entre le véhicule cible et un deuxième véhicule dans la voie adjacente sur le premier côté de la première voie qu'une distance longitudinale entre le véhicule cible et un troisième véhicule dans la voie adjacente sur le premier côté de la première voie sont supérieures à une troisième distance prédéfinie, le deuxième véhicule étant un véhicule devant le véhicule cible dans la direction de circulation, et le troisième véhicule étant un véhicule derrière le véhicule cible dans la direction de circulation ;
l'affichage, dans un cas où le véhicule cible satisfait la condition de changement de voie sûr, d'une invite indiquant que le véhicule cible est apte à être commandé pour changer vers la voie adjacente sur le premier côté de la première voie ; et
l'affichage, dans un cas où le véhicule cible ne satisfait pas la condition de changement de voie sûr, d'informations d'invite indiquant que le véhicule cible est inapte à être commandé pour changer vers la voie adjacente sur le premier côté de la première voie.

3. Procédé selon la revendication 1, dans lequel la fourniture (S303) de l'invite indiquant l'opération de conduite pour le véhicule cible sur la base de la zone cible comprend :
la détermination, dans un cas où la zone cible est la deuxième zone et où une instruction d'accélération utilisée pour ordonner au véhicule cible d'accélérer est obtenue, du fait que le véhicule cible satisfait ou non une condition d'accélération sûre, la condition d'accélération sûre représentant que, après que le véhicule cible accélère à une première accélération pendant une première durée, une distance entre un véhicule devant le véhicule cible et le véhicule cible est supérieure à 0 ;
l'affichage, dans un cas où le véhicule cible satisfait la condition d'accélération sûre, d'une invite indiquant que le véhicule cible est apte à être commandé pour effectuer une opération d'accélération ; et
l'affichage, dans un cas où le véhicule cible ne satisfait pas la condition d'accélération sûre, d'une invite indiquant que le véhicule cible est inapte à être commandé pour effectuer une opération d'accélération.

4. Procédé selon la revendication 3, dans lequel le procédé comprend en outre :
la détermination, dans un cas où le véhicule cible satisfait la condition d'accélération sûre, du fait que le véhicule cible doit ou non sortir de la deuxième zone après avoir circulé pendant la première durée ; et
la redétermination, dans un cas où le véhicule cible ne sort pas de la deuxième zone, du fait que le véhicule cible satisfait ou non la condition d'accélération sûre.

5. Procédé selon la revendication 4, dans lequel le procédé comprend en outre : l'émission d'une invite, dans un cas où le véhicule cible est sorti de la deuxième zone, indiquant que le véhicule cible est apte à être commandé pour suivre un véhicule devant lui dans une voie de circulation du véhicule cible.

6. Procédé selon la revendication 1, dans lequel la fourniture (S303) de l'invite indiquant l'opération de conduite pour le véhicule cible sur la base de la zone cible comprend :
l'émission d'une invite, dans un cas où la zone cible est la deuxième zone et où une instruction de décalage utilisée pour ordonner au véhicule cible de dévier latéralement vers un second côté d'une voie actuelle sur laquelle le véhicule cible circule est obtenue, indiquant que le véhicule cible est apte à être commandé pour dévier latéralement vers le second côté de la voie actuelle.

7. Procédé selon la revendication 1, dans lequel la fourniture (S303) de l'invite indiquant l'opération de conduite pour le véhicule cible sur la base de la zone cible comprend :
la détermination, dans un cas où la zone cible est la troisième zone et où une deuxième instruction de changement de voie utilisée pour ordonner au véhicule cible de changer vers une voie adjacente sur un premier côté de la première voie est obtenue, du fait que le véhicule cible satisfait ou non une condition de changement de voie sûr, la condition de changement de voie sûr représentant que tant une distance longitudinale entre le véhicule cible et un quatrième véhicule dans la voie adjacente sur le premier côté de la première voie qu'une distance longitudinale entre le véhicule cible et un cinquième véhicule dans la voie adjacente sur un premier côté de la première voie sont supérieures à une quatrième distance prédéfinie, le quatrième véhicule étant un véhicule devant le véhicule cible dans la direction de circulation du véhicule cible, et le cinquième véhicule étant un véhicule derrière le véhicule cible dans la direction de circulation du véhicule cible ;
l'affichage, dans un cas où le véhicule cible satisfait la condition de changement de voie sûr, d'une invite indiquant que le véhicule cible est apte à être commandé pour changer vers la voie adjacente sur le premier côté de la première voie ; et
l'affichage, dans un cas où le véhicule cible ne satisfait pas la condition de changement de voie sûr, d'une invite indiquant que le véhicule cible est inapte à être commandé pour changer vers la voie adjacente sur le premier côté de la première voie.

8. Procédé selon la revendication 7, dans lequel la fourniture (S303) de l'invite indiquant l'opération de conduite pour le véhicule cible sur la base de la zone cible comprend :
la détermination, dans un cas où la zone cible est la troisième zone et où une instruction d'accélération utilisée pour ordonner au véhicule cible d'accélérer est obtenue, du fait que le véhicule cible satisfait ou non une condition d'accélération sûre, la condition d'accélération sûre étant utilisée pour représenter que, après que le véhicule cible accélère à une deuxième accélération pendant une deuxième durée, une distance entre un véhicule devant le véhicule cible et le véhicule cible est supérieure à 0 ;
l'affichage, dans un cas où le véhicule cible satisfait la condition d'accélération sûre, d'une invite indiquant que le véhicule cible est apte à être commandé pour effectuer une opération d'accélération ; et
l'affichage, dans un cas où le véhicule cible ne satisfait pas la condition d'accélération sûre, d'une invite indiquant que le véhicule cible est inapte à être commandé pour effectuer une opération d'accélération.

9. Procédé selon la revendication 8, dans lequel le procédé comprend en outre :
la détermination, dans un cas où le véhicule cible satisfait la condition d'accélération sûre, du fait que le véhicule cible sort ou non de la troisième zone après la deuxième durée ; et
la redétermination, dans un cas où le véhicule cible ne sort pas de la troisième zone, du fait que le véhicule cible satisfait ou non la condition d'accélération sûre ;
l'émission d'une invite, dans un cas où le véhicule cible est sorti de la troisième zone, indiquant que le véhicule cible est apte à être commandé pour suivre un véhicule devant lui dans une voie de circulation du véhicule cible.

10. Dispositif électronique, comprenant :
un processeur, apte à exécuter un programme informatique ; et
un support de stockage lisible par ordinateur, le support de stockage lisible par ordinateur stockant un programme informatique, et lorsque le programme informatique est exécuté par le processeur, le procédé selon l'une quelconque des revendications 1 à 9 étant mis en œuvre.

11. Support de stockage lisible par ordinateur, configuré pour stocker un programme informatique qui amène un ordinateur à exécuter le procédé selon l'une quelconque des revendications 1 à 9.
